# EUROPEAN PATENT APPLICATION

(11) **EP 2 026 017 A2**
(43) Date of publication of application: **18.02.2009**
(21) Application number: 08252700.3
(22) Date of filing: 14.08.2008
(51) Int. Cl.: F24J 2/04, F24J 2/52

(54) **Support apparatus for supporting a solar energy collection device**

(30) Priority: 17.08.2007 GB 0716079
(71) Applicant: Solar Century Holdings Limited, London SE1 7AB (GB)
(72) Inventor: Kimberley, Malcolm John, London SE16 7WG (GB)
(74) Representative: Atkinson, Ralph

(57) **Abstract**

Apparatus for, and a method of, supporting a substantially planar solar energy collection device on a roof, the roof comprising a plurality of roof battens and a plurality of substantially flat roof elements. A back portion comprises a flange for locating the back portion on a roof batten. A front portion is configured to receive an edge of a solar energy collection device and defines a plurality of apertures in a front perimeter wall. First and second side portions are configured to extend from the back portion and to be releasably secured to the front portion. The apparatus is configurable to provide a frame for surrounding a solar energy collection device. The frame is securable to the roof by securing the back portion to a roof batten. The front portion is releasable from the first and second side portions when the frame is secured to a roof batten.

## Description

### CROSS REFERENCE TO RELATED APPLICATIONS

This application claims priority from United Kingdom Patent Application No. 07 16 079.9, filed 17 August 2007, the whole contents of which are incorporated herein by reference in their entirety.

### BACKGROUND OF THE INVENTION

### 1. Field of the Invention

The present invention relates to apparatus for, and a method of, supporting a substantially planar solar energy collection device on a roof, the roof comprising a plurality of roof battens and a plurality of substantially flat roof elements.

### 2. Description of the Related Art

It is known to provide a roof structure with a solar energy collecting panel. In some applications, the solar energy collecting panel is mounted upon a roof structure covering. In other applications, the solar energy collecting panel is mounted as part of a roof structure covering.

Some roof elements are substantially flat, such as slate roof tiles. It is desirable to provide a roof comprising a plurality of roof battens and a plurality of substantially flat roof elements with a substantially planar solar energy collection device. However, a problem exists in achieving satisfactory inclusion of a substantially planar solar energy collection device within a roof comprising substantially flat roof elements.

### BRIEF SUMMARY OF THE INVENTION

According to an aspect of the present invention, there is provided apparatus for supporting a substantially planar solar energy collection device on a roof, said roof comprising a plurality of roof battens and a plurality of substantially flat roof elements, comprising: a back portion configured to be secured to a roof batten and comprising a flange for locating said back portion on a roof batten, a front portion configured to receive an edge of said substantially planar solar energy collection device and defining a plurality of apertures in a front perimeter wall for allowing ventilation and water run off, and a first side portion and a second side portion configured to extend from said back portion and to be releasably secured to said front portion; said back portion, said front portion said first side portion and said second side portion are configurable to provide a frame for surrounding said substantially planar solar energy collection device and said frame is securable to said roof by securing said back portion to a roof batten, and said frame is configured such that said front portion is releasable from said first side portion and said second side portion) when said frame is secured to a roof batten.

According to a further aspect of the present invention, there is provided a method of supporting a substantially planar solar energy collection device on a roof, said roof comprising a plurality of roof battens and a plurality of substantially flat roof elements, comprising the steps of: receiving frame apparatus comprising a back portion configured to be secured to a roof batten and comprising a flange for locating said back portion on a roof batten, a front portion configured to receive an edge of said substantially planar solar energy collection device and defining a plurality of apertures in a front perimeter wall for allowing ventilation and water run off, and a first side portion and a second side portion configured to extend from said back portion and to be releasably secured to said front portion, configuring said frame apparatus to provide a frame surrounding said substantially planar solar energy collection device, and securing said frame to said roof by securing said back portion to a roof batten.

### BRIEF DESCRIPTION OF THE SEVERAL VIEWS OF THE DRAWINGS

Figure 1 shows support apparatus, in use, supporting a substantially planar solar energy collection device on a roof;
Figure 2 shows support apparatus;
Figure 3 shows the support apparatus of Figure 2 located relative to a roof batten;
Figure 4 shows the support apparatus of Figure 2 located relative to a roof batten and with a front portion removed;
Figure 5 shows features of a front portion of support apparatus;
Figure 6 shows a further example of support apparatus;
Figure 7 shows an adjustable edge of the support apparatus of Figure 6, in a first configuration;
Figure 8 shows an adjustable edge of the support apparatus of Figure 6 positioned relative to a substantially flat roof element;
Figure 9 shows an adjustable edge of the support apparatus of Figure 6, in a second configuration and positioned relative to a similar adjustable edge in a similar configuration;
Figure 10 shows a liner element located relative to a roof batten;
Figure 11 shows a liner element located relative to a roof batten and a substantially flat roof element;
Figure 12 shows support apparatus located relative to a liner element and a substantially flat roof element;
Figure 13 illustrates support apparatus incorporated within a roof, the roof comprising a plurality of substantially flat roof elements;
Figure 14 shows features of a back portion of support apparatus; and
Figure 15 shows the support apparatus of Figure 14 located relative to a roof batten and with a front portion removed.

### DESCRIPTION OF THE BEST MODE FOR CARRYING OUT THE INVENTION

### Figure 1

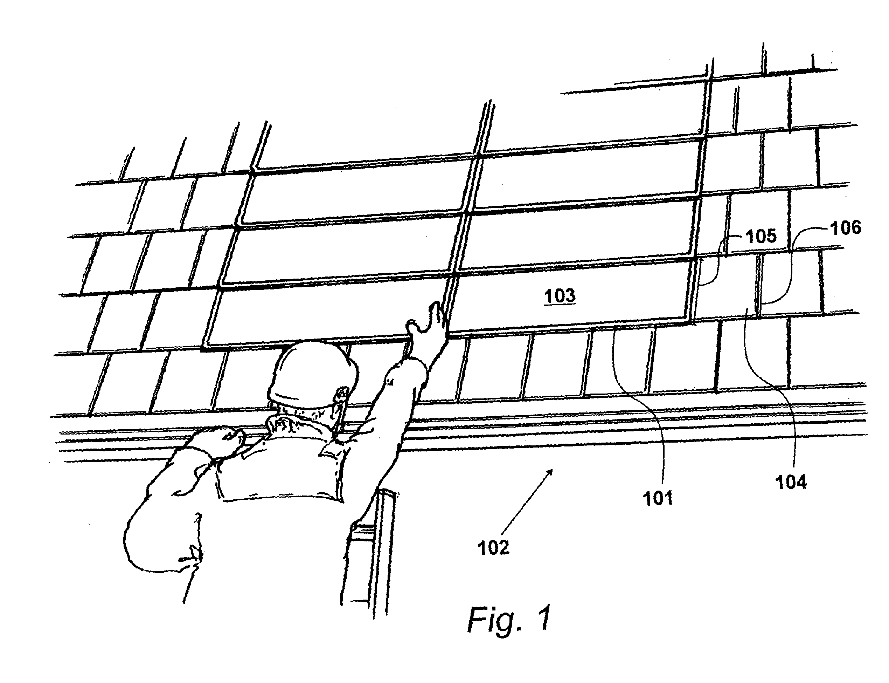

Figure 1 shows a substantially planar solar energy collection device supported on a roof by support apparatus. Support apparatus 101 is shown fitted on roof 102. The support apparatus is configured to provide a frame surrounding a substantially planar solar energy collection device 103. The roof structure comprises a plurality of roof battens (not shown in this Figure) and a plurality of substantially flat roof elements, such as roof element 104. In this example, substantially planar solar energy collection device 103 is a photo-voltaic device but in alternative applications the solar energy collection device may be an alternative type of device.

The substantially flat roof elements may be any suitable roofing materials. In an application, the substantially flat roof elements are slates, which may be cut from natural slate or fabricated from slate-like material such as fibre cements. In an application, the substantially flat roof elements have the approximate dimensions of 600mm x 300mm, however, in alternative embodiments the dimensions may vary. In an example, the support apparatus is suitable for use with substantially flat roof elements having a thickness of between approximately 4mm and 10mm, but in alternative examples this may vary.

In the arrangement shown in Figure 1, support apparatus 101 is located to cover a central portion of the roof 102. The support apparatus may be located to cover a different region of the roof, however, it is to be appreciated that it may be desirable to space a solar energy collection device away from the edges of the roof.

In an example, the support apparatus is configured to be laid in-line, known as non broken-bond, as shown in Figure 1. In an inline arrangement, a first support apparatus is aligned with a second support apparatus that is located above or below the first support apparatus. In an alternative example, the support apparatus is configured to be laid offset, known as broken-bond. In an offset arrangement, a first support apparatus is offset with a second support apparatus that is located above or below the first support apparatus.

In an application, support apparatus 101 has a width dimension 105 that is substantially equal to the length dimension 106 of roof element 104. In an alternative application, support apparatus 101 has a width dimension 105 that is greater than the length dimension 106 of roof element 104. In such an application, it is possible to increase the length dimension of the roof element 104 through use of an extender clip (not shown) so as to provide a suitable headlap. An extender clip may be fabricated from a plastics material or any other suitable material.

### Figure 2

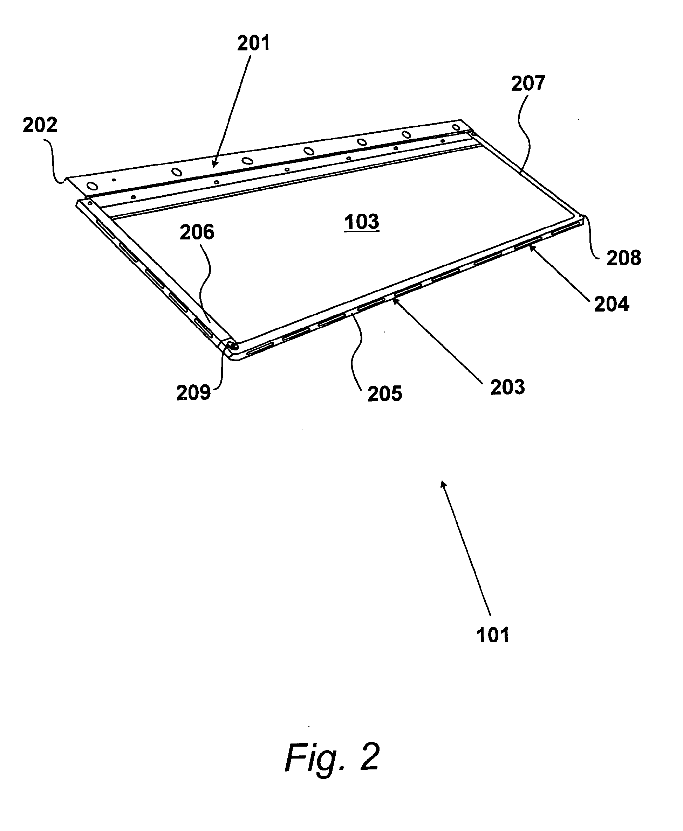

Support apparatus 101 is shown in further detail in Figure 2. Support apparatus 101 comprises a back portion 201 configured to be secured to a roof batten (not shown in this Figure) and comprising a flange 202 for locating the back portion on a roof batten. Support apparatus 101 comprises a front portion 203 configured to receive an edge of a substantially planar solar energy collection device and defining a plurality of apertures, such as aperture 204, in a front perimeter wall 205. These apertures are provided for allowing ventilation and water run off. Support apparatus 101 further comprises a first side portion 206 and a second side portion 207, each configured to extend from the back portion 201 and to be releasably secured to the front portion 203. Back portion 201, front portion 203 and the first and second side portions 206, 207 are configured to provide a frame for surrounding a substantially planar solar energy collection device 103 and that is securable to a roof by securing the back portion 201 to a roof batten. Support apparatus 101 is configured such that the front portion 203 is releasable from the first side portion 206 and the second side portion 207 when the support apparatus is secured to a roof batten.

In an example, front portion 203 defines a fixing aperture at each end, such as aperture 208, for allowing front portion 203 to be releasably secured to the first side portion 206 and the second side portion 207 by means of a mechanical fixing. The releasable mechanical fixing may be comprise a bolt, such as bolt 209, a screw, a pin or a clamp device. However, any suitable device to provide a releasable attachment between the front portion 203 and the side portions 206, 207 may be employed. The front portion may be connected to the front or the side of each side portion.

### Figure 3

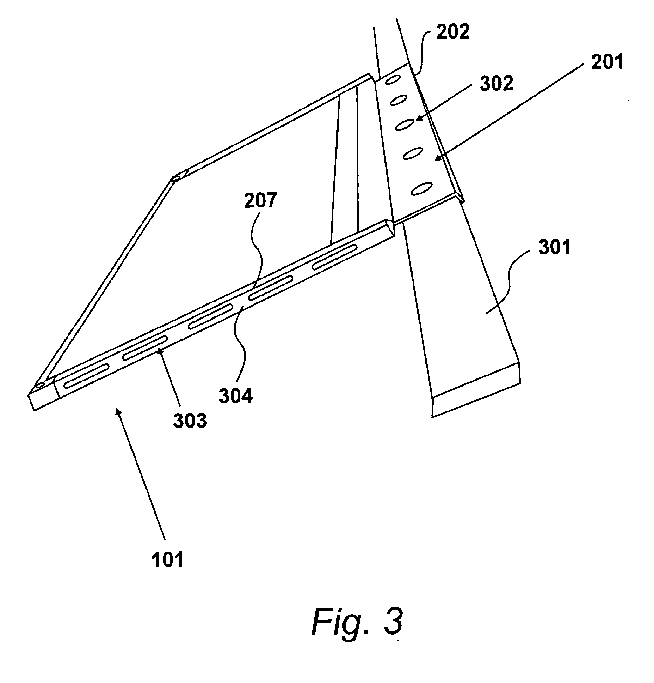

Figure 3 shows support apparatus 101 located relative to a roof batten 301. Roof batten 301 forms part of a sloping roof. Flange 202 is provided to the rear of the back portion. In use, flange 202 extends down along the side of the roof batten that faces towards the sky, such that the back portion in effect is hooked over the roof batten, such that the remainder of the back portion extends over the roof batten towards the ground. Back portion 201 defines a plurality of apertures, such as aperture 302, for allowing support apparatus 101 to be secured to a roof batten by means of a mechanical fixing, for example a bolt, a screw or any other suitable device. In an example, fixing apertures are slightly oval in shape to allow for thermal expansion. The back portion may be fabricated from a metal, such as aluminium.

As shown in Figure 3, a side portion may be provided with a plurality of apertures. In this example, both side portions define a plurality of apertures, such as aperture 303, in a side perimeter wall, such as side perimeter wall 304 of second side portion 207. These apertures facilitate ventilation and water run off.

### Figure 4

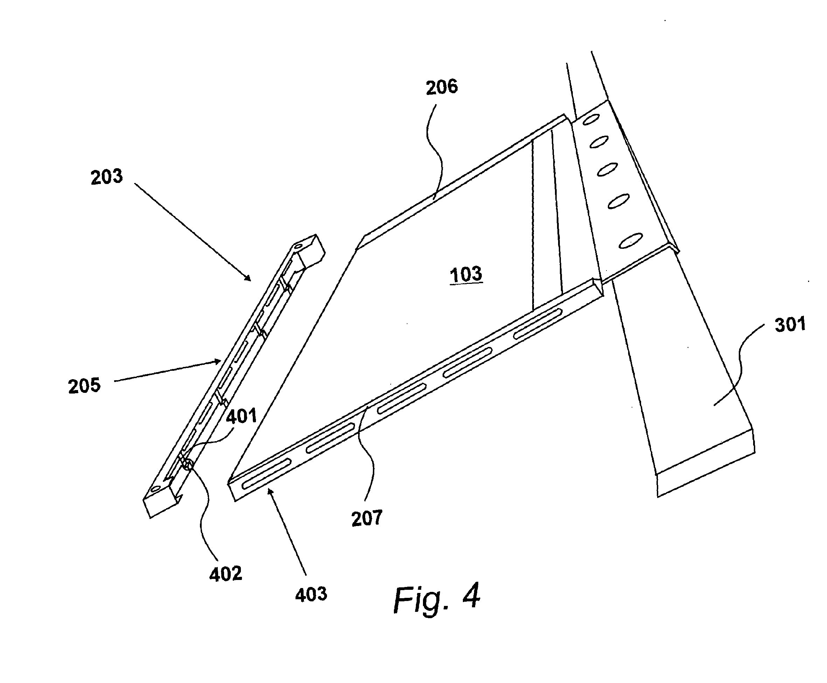

As shown in Figure 4, when support apparatus 101 is secured relative to a roof batten, such as roof batten 301, front portion 203 is releasable from the first and second side portions 206, 207. When the front portion 203 is removed from the remainder of the frame, the back portion and side portions of the frame remains secured to the roof batten and hence the roof. In turn, a received solar energy collection device is held on the roof by the back portion and side portions.

The ability to remove front portion 203 from the secured support apparatus enables maintenance and/or replacement of a solar energy collection device supported within the frame of the support apparatus, such as device 103, as required. This allows maintenance to be performed without the need to remove surrounding roof elements from the roof. In this way, undesirable disturbance of surrounding roof elements is avoided. This is particularly advantageous when dealing with slates that are of a fragile nature.

Further features of the front portion are illustrated in Figure 4. Front portion 203 is configured to receive a substantially planar solar energy collection device in an arrangement in which a gap is provided underneath the solar energy collection device for allowing ventilation. Front portion 203 is configured to receive a substantially planar solar energy collection device in an arrangement in which a gap is provided between the received edge of the substantially planar solar energy collection device and said front perimeter wall 205. Again this feature serves to facilitate ventilation.

In an example, front portion 203 comprises at least one support brace 401 that presents a step, as indicated in region 402, onto which a solar energy collection device may be located. The support brace is configured to receive a substantially planar solar energy collection device such that the solar energy collection device extends in a plane that is held away from any planar regions of the support apparatus and roof. In this way, the solar energy collection material is maintained at a position that is displaced from the bottom 403 of the frame and the lower end of the frame, in this example front perimeter wall 205. In addition to improving ventilation paths around a received solar energy collection device, this arrangement also serves to allow water run off to prevent pooling. In alternative examples, any component or profile that achieves the provision of ventilation and water run off space around a received solar energy collection device may be used.

### Figure 5

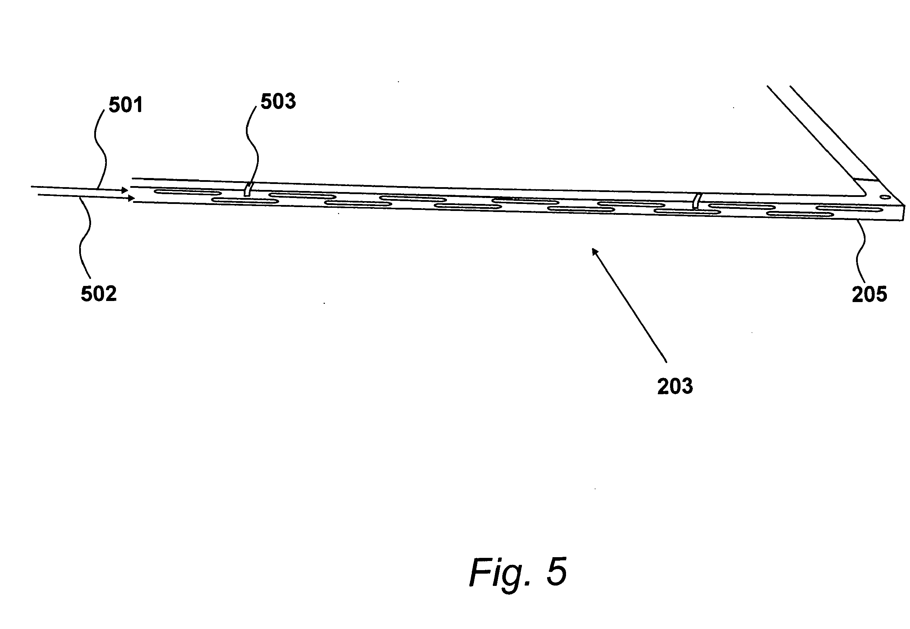

Figure 5 shows features of a front portion in further detail. As previously described, front portion 203 defines a plurality of apertures in a front perimeter wall 205. In an embodiment, a first row of apertures 501 is defined by front perimeter wall 205. In addition, the front portion defines a second row of apertures 502 in the front perimeter wall 205 and the apertures in the second row 502 are offset from the apertures in the first row. This offsetting of apertures allows air to circulate whilst reducing the risk of water entering the apparatus. Allowing air to circulate underneath a located solar energy collection device reduces the risk of degradation of the material used for solar energy collection and also serves to cool the solar energy collection device in order to avoid invalidating any warranties associated with the solar energy collection device.

The front portion the support apparatus may also present at least one clamping region, such as clamping region 503, for allowing a solar energy collection device to be connected to the front portion. In an application a connection between a solar energy collection device and a front portion is provided by means of a clip, although in alternative applications other fixing devices may be utilised.

### Figure 6

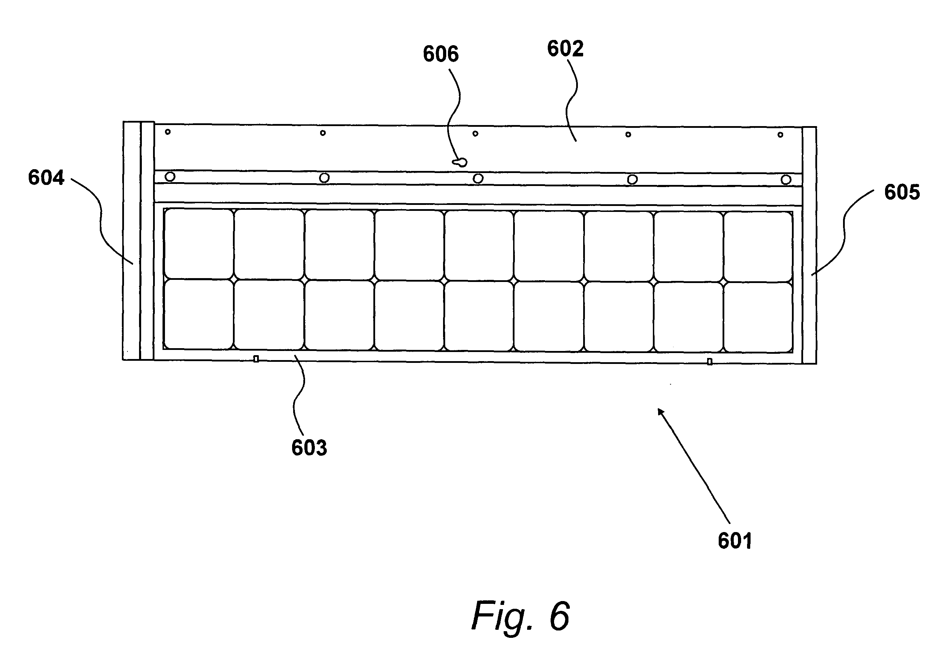

Figure 6 shows support apparatus for supporting a substantially planar solar energy collection device on a roof, the roof comprising a plurality of roof battens and a plurality of substantially flat roof elements. Support apparatus 601 comprises a back portion 602 configured to be secured to a roof batten and comprising a flange for locating the back portion on a roof batten. Support apparatus 601 comprises a front portion 603 configured to receive an edge of a substantially planar solar energy collection device and defining a plurality of apertures (not shown) for allowing ventilation and water run off. A first side portion 604 and a second side portion 605 are provided that are configured to extend from the back portion 602 and to be releasably secured to the front portion 603. In a similar manner to support apparatus 101, support apparatus 601 provides a frame for surrounding a substantially planar solar energy collection device that is securable to the roof by securing the back portion to a roof batten. Support apparatus 101 is also similarly configured to allow the front portion 603 to be released from the first and second side portions 604, 605 of the frame of the support apparatus when the frame is secured to a roof.

In this example, first side portion 604 and second side portion 605 of support apparatus 601 each present an adjustable edge. In a first configuration, each adjustable edge is configured to be positioned against a roofing element and in a second configuration, each adjustable edge is configured to be positioned against a similar edge. The adjustable edge feature is described in further detail below.

Back portion 602 defines a substantially planar region for receiving a portion of a substantially flat roof element. The back portion comprises a hole, such as hole 606 for receiving a cable passed through for linking adjacent solar energy collection devices together. This feature acts as an aid when the support apparatus is being installed. Each solar energy collection device mounted on a roof will have one or more cables attached thereto. When a solar energy collection device is in the process of being mounted to a roof, hole 606 allows an associated cable to be held proud so that it does not become caught under a solar energy collection device. Hole 606 therefore provides for easy location of a cable for appropriate connection.

### Figure 7

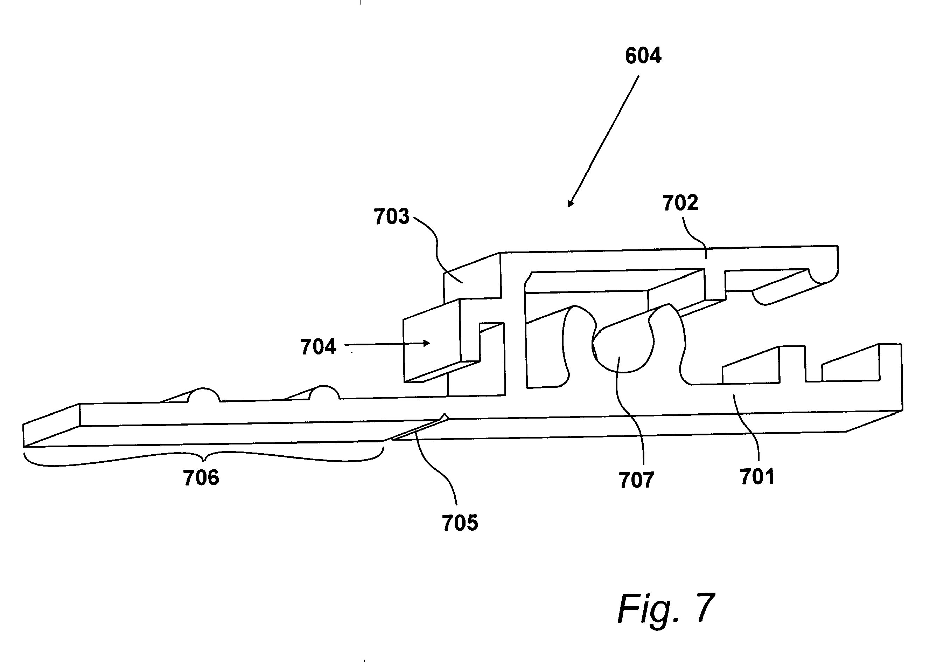

Figure 7 illustrates the cross-section of an adjustable edge, such as that provided by first side portion 604. The adjustable edge comprises a first plate 701 and a second plate 702, which extend substantially parallel to each other. However, plate 701 extends beyond the ends of plate 702. A connecting wall 703 extends substantially perpendicularly between plate 701 and plate 702 and presents a hook portion 704. A notch 705 is provided in plate 701 substantially at the position of the free end of the hook portion 704. Adjustable edge 604 is configurable from the first configuration, in which the adjustable edge is configured to be positioned against a roofing element, into the second configuration, in which the adjustable edge is configured to be positioned against a similar edge, by the removal of an extension portion 706 of the adjustable edge. The extension portion extends from one side of notch 705. Thus, notch 705 is provided along a predetermined line that delineates the fixed end of the extension portion 706 and facilitates the removal of portion 706 of the adjustable edge.

In an example, each adjustable edge is made from a plastics material, such as ASA, or a metal, such as aluminium. The adjustable edges may be produced by an extrusion process.

In this illustrated example, notch 705, has a V-shaped cross-section to concentrate stress when pressure is applied to plate 701 in order to break it. It is to be appreciated that the amount of force required to snap plate 701 along the line of notch 705 may vary between applications depending upon the construction of the plate 701 and the material of fabrication. It is to be appreciated that plate 701 may require a plurality of bending operations in each direction about notch 705 before separation of the extension portion 706 is achieved. A tool, such as a knife, may be used along the notch to facilitate the removal process.

In this example, a cylindrical channel 707 is presented, which is provided by protrusions projecting from plate 701. Cylindrical channel 604 is configured to receive a fixing element, such as a self-tapping screw, to allow attachment, detachment and reattachment of a front portion.

### Figure 8

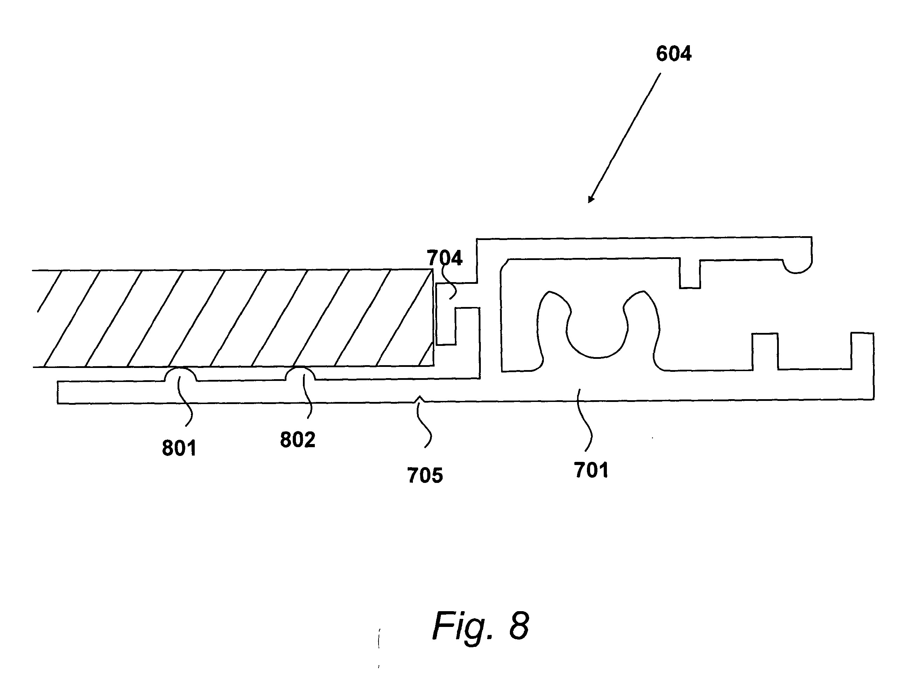

In Figure 8, adjustable edge 604 is shown, in use, in the first configuration, in which the adjustable edge is configured to be positioned against a roofing element. Thus, it can be seen that adjustable edge 604 still has portion 706 in tact. Hook portion 704 is shown abutting against a substantially flat roof element, such as slate 104. In this shown arrangement, roof element 104 sits upon portion 706 of plate 701.

A first ridge 801 and a second ridge 802 are shown, which are provided along plate 701 to elevate slate 104 in order to provide a space between slate 104 and the main body of portion 706. This feature serves to break capillary action. The ridges 801, 802 are oriented such that, in use, the ridges extend in the downward direction of the roof, to direct water away from the support apparatus.

### Figure 9

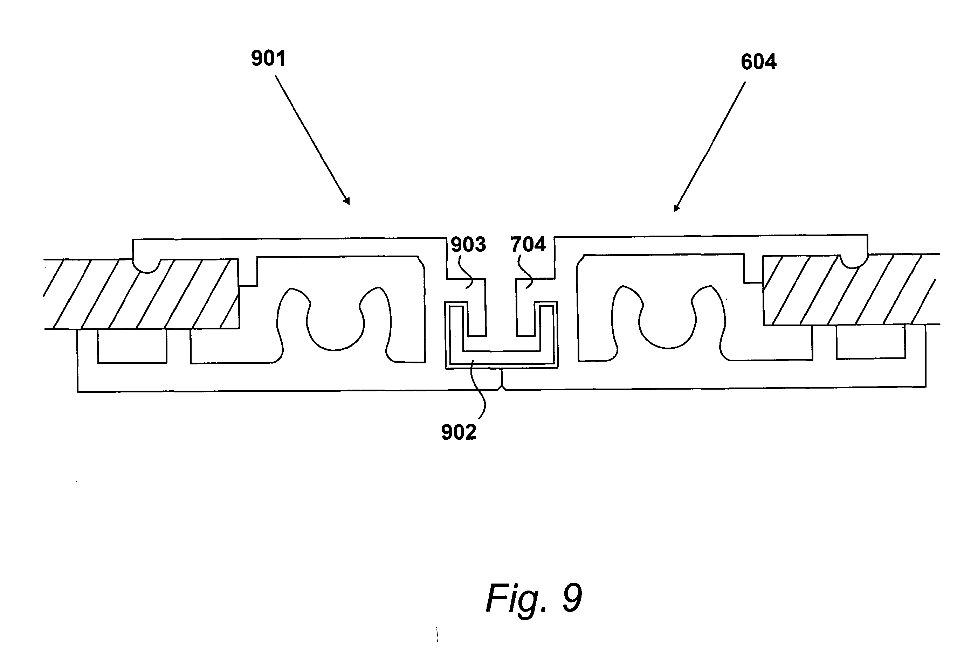

Figure 9 shows adjustable edge portion 604 positioned alongside a similar edge portion 901. Both adjustable edge portions 604, 901 are in the second configuration, in which the adjustable edge is configured to be positioned against a similar edge. In this shown configuration, the extension portions of the adjustable edges have been removed. As described previously with reference to adjustable edge portion 604 of Figure 7, this may be achieved by snapping off extension portion 706 at notch 705 shown in Figure 7.

In the arrangement shown in Figure 9, the two edges 604, 901. are located to abut each other. The support apparatus further comprises a channel element that is configured to extend between the two adjacent adjustable edges. Channel element 902 has a substantially U-shaped cross-section and is configured to be located between hook portion 704 of adjustable edge 604 and hook portion 903 of adjustable edge 902. The channel element serves to fix the adjustable edges 604, 901 together and also defines a channel along which water is able to run off. Therefore, the channel piece 902 provides a dual functionality in that it provides a locking detail between the two adjacent edges and also provides a weatherproof element that extends between the adjacent edges. Thus, the channel element provides a degree of weatherproofness at the join.

### Figure 10

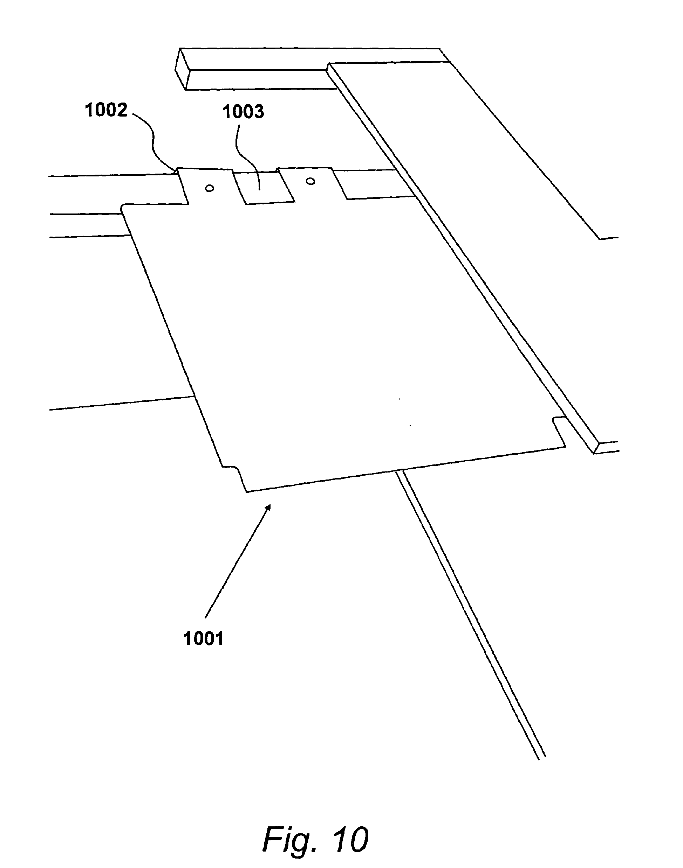

Figure 10 shows a further element of support apparatus. The support apparatus may comprise at least one liner tray having a flange for locating the liner tray on a roof batten. In a typical application, a plurality of liner trays are provided and utilised. In an example, a liner tray is fabricated from a metal. However, the liner tray may be fabricated from any water impermeable material. Liner tray 1001, also known as a soak tray, has a flange 1002 for locating the liner tray on a roof batten. In Figure 10, liner tray is shown located on roof batten 1003. Flange 1002 of liner tray 1001 is configured to locate the liner tray relative to a roof batten in a similar fashion to flange 202 of back portion 201 of support apparatus 101 (detailed in Figure 2). Thus, the support apparatus provides similar elements that have similar associated methods of use and hence the support apparatus is intuitive to install.

### Figure 11

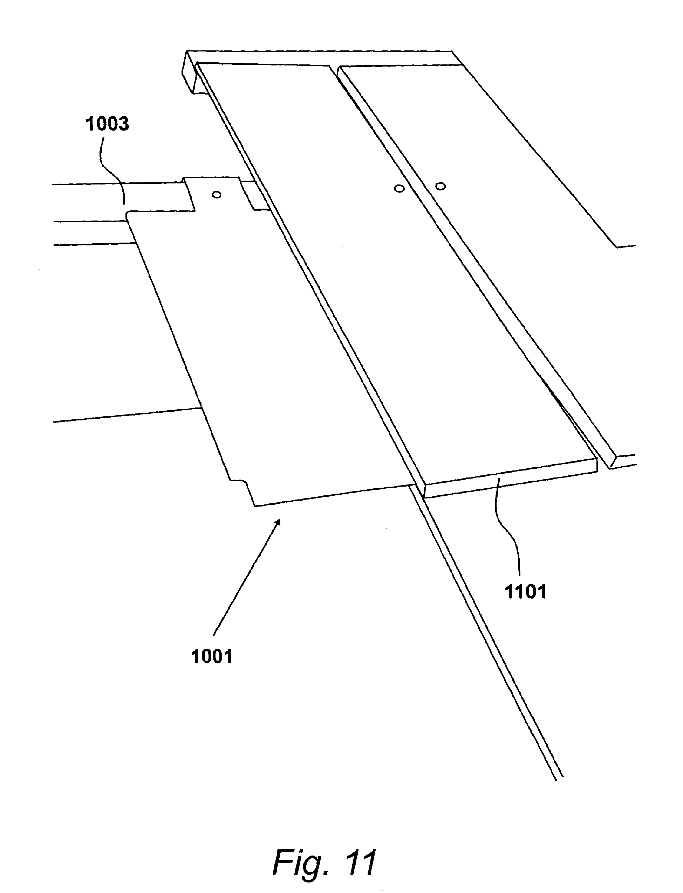

As shown in Figure 11, once liner tray 1001 is located with respect to a roof batten, such as roof batten 1003, substantially flat roof elements, such as roof element 1101, may be placed on top of the located liner tray 1001. A roof element may be placed on top of a located liner tray in an arrangement in which the roof element fully or partially covers the main surface area of the liner tray. Each liner tray acts to direct any water that falls onto the liner tray to run off, and so serves to protect any damage to the roof due to the prolonged presence of water.

### Figure 12

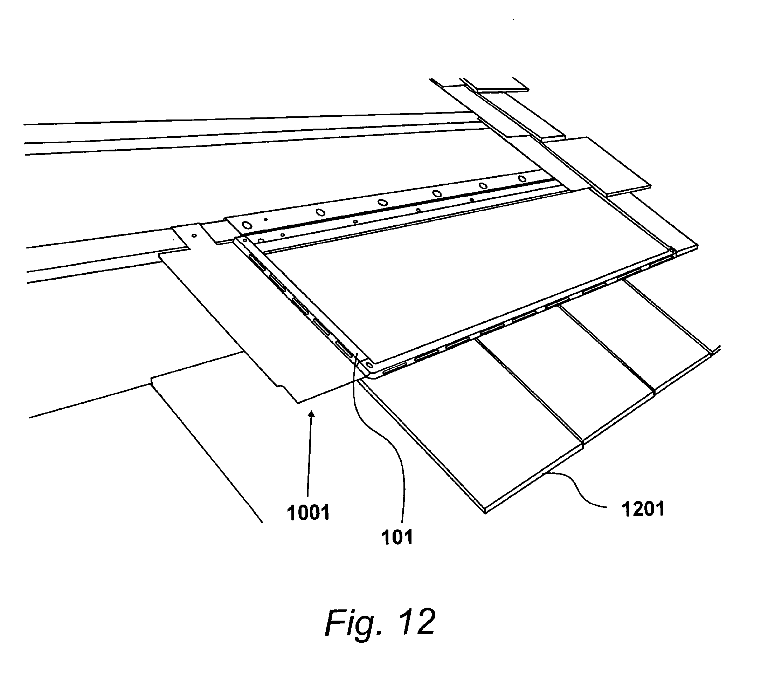

As illustrated in Figure 12, a liner tray, such as liner tray 1001, serves to provide an interface between a support apparatus, such as support apparatus 101, and roof elements, such as roof elements 1201. By positioning liner trays all around the perimeter of support apparatus frame 101, a watertight edging is effectively provided. It is to be appreciated that use of the liner tray provides an interface between the support apparatus and the roof elements, and provides a degree of flexibility that enables the support apparatus to be used on a roof that comprises roof elements having various dimensions.

### Figure 13

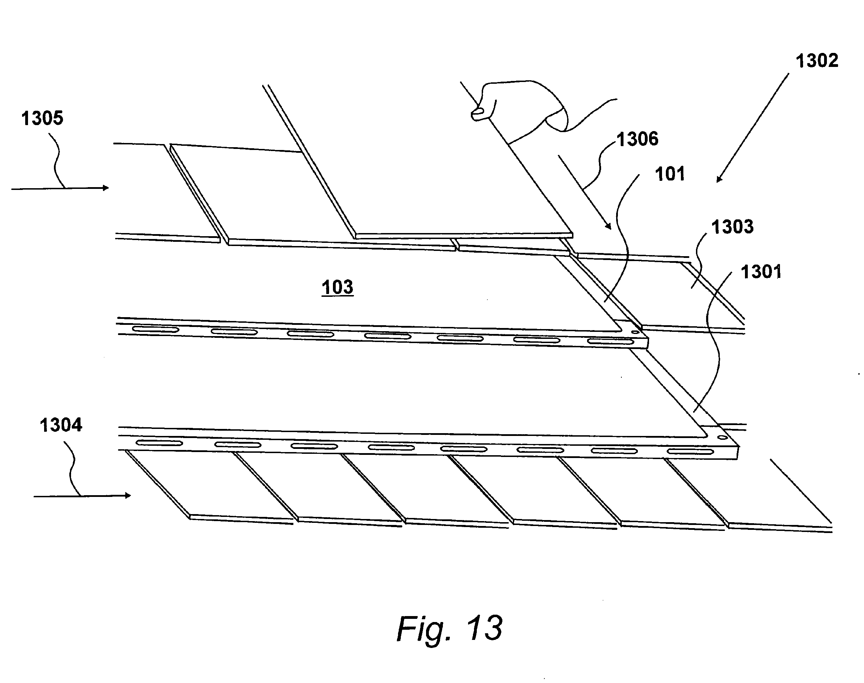

Figure 13 shows a plurality of support apparatus secured upon a roof that comprises a plurality of substantially flat roof elements. Support apparatus 101 and support apparatus 1301, which is substantially similar to support apparatus 101, are shown mounted to a roof, generally indicated at 1302. The roof comprises a plurality of substantially flat roof elements 1303. In the shown arrangement, a plurality of roof elements 1303 are laid in a first row 1304. Support apparatus 1301 extends to overlap upper portions of the first row 1304 of roof elements 1303. Support apparatus 101 is arranged to extend to overlap an upper portion of support apparatus 1301. A second row 1305 of roof elements 1303 is arranged to extend to overlap an upper portion of support apparatus 101. Side columns, such as column 1306 of roof elements 1303, are provided alongside each edge of the support apparatus. Roof elements in columns may be arranged to overlap side portions of a support apparatus.

Thus, a substantially planar solar energy collection device, such as device 103, may be supported within a roof by the described support apparatus. The support apparatus provides for the substantially planar solar energy collection device to be integrated within a roof in a substantially flush arrangement relative to the roof elements of the remainder of the roof. This feature contributes to the weathertightness of the support apparatus in use; reducing the effects of wind and rain upon the support apparatus and the received solar energy collection device.

### Figure 14

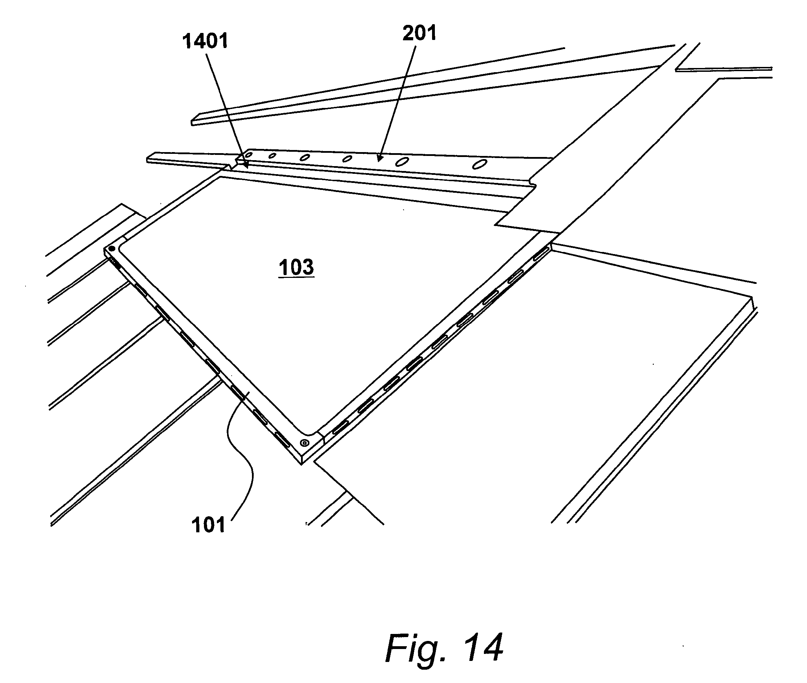

Figure 14 shows support apparatus 101 located within a roof. In an example, back plate 201 defines a channel, indicated at 1401. Channel 1401 extends along back portion 201 such that it is oriented to run substantially in the direction of the top edge of a received solar energy collection device, such as solar energy collection device 103. Channel 1401 functions to direct any water that enters the apparatus and feeds up through capillary action over overlying tile to run along the channel to the sides of the support apparatus to flow away down the sides of the support apparatus. The channel hence encourages water run off. In addition, the channel may serve to strengthen the back portion.

In an example, the side portions of support apparatus 101 are configured to encourage water run off, by for example the provision of further channels.

### Figure 15

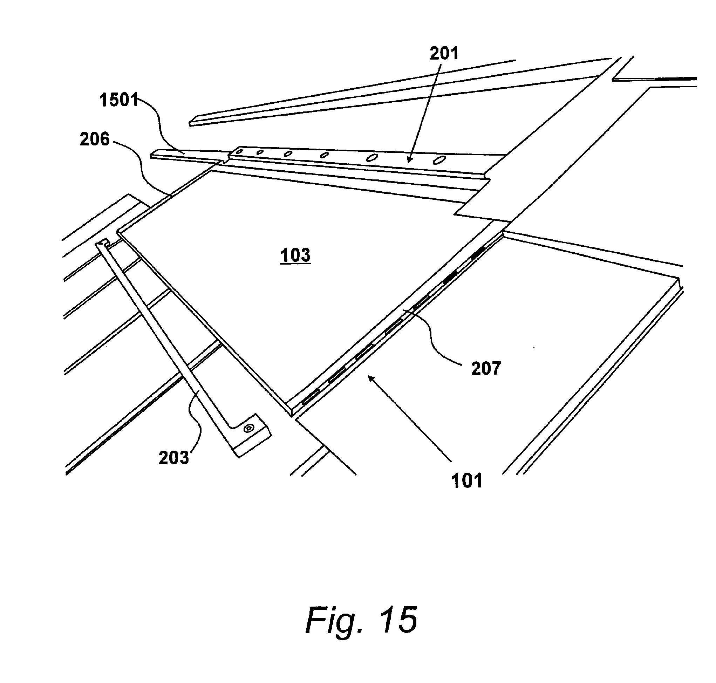

Figure 15 shows the arrangement of Figure 14, however, in Figure 15 front portion 203 of support apparatus 101 is shown removed from the remainder of the frame. It is thus to be appreciated that in use, support apparatus 101 is secured to a roof batten, such as roof batten 1501, by means of attachment of back plate 201 to the roof batten. Front portion 203 is releasably attachable to first and second side portions 206, 207 such that when the support apparatus is in use, the front portion may be removed to allow access to solar energy collection device, such as solar energy collection device 103. If desired, front portion 203 may be removed from side portions 206, 207 to allow substantially planar solar energy collection device 103 to be removed from the roof and replaced by a substitute solar energy collection device. The support apparatus described herein thus provides a convenient way of securing a substantially planar solar energy collection device within a roof comprising substantially flat roof elements that also allows convenient access to a secured substantially planar solar energy collection device.

It is to be appreciated that specific arrangements of components of the described support apparatus may vary between examples. For example, the back portion may be provided as two separate parts that are connected together by a mechanical fixing or by welding. Alternatively, the back portion is made as a single piece. Other of the front portion and side portions may have either construction. The front portion and side portions may be made from a metal, such as aluminium. In an example, each side portion is configured to be releasably attached to the back portion in addition to the front portion. Each of the side portions and the front portion may present a perimeter wall that is formed by bending a substantially planar element to provide a front wall and a back wall between which the perimeter wall extends.

## Claims

1. Apparatus (101) for supporting a substantially planar solar energy collection device (103) on a roof (102), said roof comprising a plurality of roof battens (301) and a plurality of substantially flat roof elements (104), comprising:
a back portion (201) configured to be secured to a roof batten (301) and comprising a flange (202) for locating said back portion on a roof batten (301),
a front portion (203) configured to receive an edge of said substantially planar solar energy collection device (103) and defining a plurality of apertures (204) in a front perimeter wall (205) for allowing ventilation and water run off, and
a first side portion (206) and a second side portion (207) configured to extend from said back portion (201) and to be releasably secured to said front portion (203);
said back portion (201), said front portion (203) said first side portion (206) and said second side portion (207) are configurable to provide a frame for surrounding said substantially planar solar energy collection device (103) and said frame is securable to said roof (102) by securing said back portion (201) to a roof batten (301), and
said frame is configured such that said front portion (203) is releasable from said first side portion (206) and said second side portion (207) when said frame is secured to a roof batten (301).

2. Apparatus according to claim 1, wherein said first side portion (206) and said second side portion (207) each defines a plurality of apertures (303) in a side perimeter wall (304) for allowing ventilation and water run off.

3. Apparatus according to claim 1, wherein said front portion (203) defines a first row of apertures (501) and a second row of apertures (502) in said front perimeter wall (205) and the apertures in said second row (502) are offset from the apertures in said first row (501).

4. Apparatus according to claim 1, wherein said first side portion (604) and said second side portion (605) each present an adjustable edge such that:
in a first configuration said adjustable edge is configured to be positioned against a roofing element; and
in a second configuration said adjustable edge is configured to be positioned against a similar edge.

5. Apparatus according to claim 4, wherein each said adjustable edge (604, 605) is configurable from said first configuration into said second configuration by the removal of an extension portion (706) of said adjustable edge.

6. Apparatus according to claim 5, wherein each said adjustable edge (604, 605) is provided with a notch (705) along a predetermined line to facilitate removal of said extension portion (706) of said adjustable edge.

7. Apparatus according to claim 4, wherein each said adjustable edge (604, 605) is fabricated from a plastics material.

8. Apparatus according to claim 4, wherein each said adjustable edge (604, 605) is fabricated from aluminium.

9. Apparatus according to claim 4, further comprising a channel element (902) configured to be extend between two adjacent adjustable edges (604, 605).

10. Apparatus according to claim 1, further comprising at least one liner tray (1001) having a flange (1002) for locating said liner tray on a roof batten (1003).

11. Apparatus according to claim 1, wherein said front portion (203) is configured to receive said substantially planar solar energy collection device (103) in an arrangement in which a gap is provided underneath said substantially planar solar energy collection device (103) for allowing ventilation.

12. Apparatus according to claim 1, wherein said front portion (203) is configured to receive said substantially planar solar energy collection device in an arrangement in which a gap is provided between the received edge of said substantially planar solar energy (103) collection device and said front perimeter wall (205).

13. Apparatus according to claim 1, wherein said back portion (201) defines a substantially planar region for receiving a portion of a substantially flat roof element.

14. Apparatus according to claim 1, wherein said substantially planar solar energy collection device (103) is a photo-voltaic device.

15. Apparatus according to claim 1, wherein said plurality of substantially flat roof elements (104) comprises slates that are cut from natural slate or fabricated from slate-like material.

16. Apparatus according to claim 1, wherein said back portion (201) comprises a hole (606) for receiving a cable passed through for linking adjacent solar energy collection devices together.

17. A method of supporting a substantially planar solar energy collection device (103) on a roof (102), said roof comprising a plurality of roof battens (301) and a plurality of substantially flat roof elements (104), comprising the steps of:
receiving frame apparatus (101) comprising a back portion (201) configured to be secured to a roof batten (301) and comprising a flange (202) for locating said back portion (201) on a roof batten (301),
a front portion (203) configured to receive an edge of said substantially planar solar energy collection device (103) and defining a plurality of apertures (204) in a front perimeter wall (205) for allowing ventilation and water run off, and
a first side portion (206) and a second side portion (207) configured to extend from said back portion (201) and to be releasably secured to said front portion (203),
configuring said frame apparatus (101) to provide a frame surrounding said substantially planar solar energy collection device (103), and
securing said frame to said roof (102) by securing said back portion (201) to a roof batten (301).

18. A method according to claim 17, further comprising the steps of:
releasing said front portion (203) from said first side portion (206) and said second side portion (207) when said frame is secured to a roof batten (301).

19. A method according to claim 17, further comprising the steps of:
locating a substantially planar solar energy collection device (103) between said back portion (201), said first side portion (206) and said second side portion (207), and
securing said front portion (203) to said first side portion (206) and said second side portion (207).

20. A method according to claim 17, wherein said substantially planar solar energy collection device (103) is a photo-voltaic device.
